# EUROPEAN PATENT APPLICATION

(11) **EP 4 610 070 A1**
(43) Date of publication of application: **03.09.2025**
(21) Application number: 23882752.1
(22) Date of filing: 27.10.2023
(51) Int. Cl.: B60G 11/14, F16F 1/02, F16F 1/06

(54) **COIL SPRING, SUSPENSION DEVICE, AND METHOD FOR PRODUCING COIL SPRING**

(30) Priority: 28.10.2022 JP 2022173454
(71) Applicant: NHK Spring Co., Ltd., Yokohama-shi, Kanagawa 236-0004 (JP)
(72) Inventor: OKABE, Satoshi, Yokohama-shi, Kanagawa 236-0004 (JP); TAKAHASHI, Keita, Yokohama-shi, Kanagawa 236-0004 (JP); MINO, Yoshinobu, Yokohama-shi, Kanagawa 236-0004 (JP); KUMAI, Shintaro, Yokohama-shi, Kanagawa 236-0004 (JP)
(74) Representative: AWA Sweden AB
(86) International application number: PCT/JP2023/038869
(87) International publication number: WO 2024/090550

(57) **Abstract**

According to an embodiment, a coil spring is formed of a wire wound in a helical shape, and includes an end turn portion and an effective portion. A surface of the wire in the end turn portion has a first area and a second area softer than the first area. Further, in a circumferential direction around an axis of the wire, the second area is formed over a range wider than that of the first area.

## Description

### Technical Field

The present invention relates to a coil spring, a suspension device, and a coil spring manufacturing method.

### Background Art

For example, suspension devices of vehicles such as automobiles use coil springs. Such coil springs are required to have excellent settling resistance and corrosion fatigue resistance.

Increasing the hardness of a wire constituting a coil spring as a whole is expected to improve settling resistance. However, in this case, for example, if a corrosion pit is generated on the surface of the wire as the coating film applied to the wire is partly removed, a crack based on this corrosion pit could be generated in the wire. When the hardness of the wire is high, the crack progresses quickly. This may result in early breakage of the coil spring. To the contrary, when the hardness of the wire is low as a whole, the settling resistance decreases.

Patent Literatures 1, 2, and 3 are known examples that consider the settling resistance and the corrosion fatigue resistance of coil springs. In these Patent Literatures, part of the inside and the surface of the wire (spring steel) is softened to increase the settling resistance and the corrosion fatigue resistance.

### Citation List

### Patent Literatures

Patent Literature 1: JP 2016-191445 A
Patent Literature 2: JP 6053916 B
Patent Literature 3: JP 2010-133558 A

### Summary of Invention

### Technical Problem

Even in light of Patent Literatures 1, 2 and 3, the settling resistance and the corrosion fatigue resistance of coil springs still have room for improvement. This disclose aims to provide a coil spring having excellent settling resistance and corrosion fatigue resistance, a suspension device comprising the coil spring, and a manufacturing method of the coil spring.

### Solution to Problem

According to an embodiment, a coil spring is formed of a wire wound in a helical shape, and includes an end turn portion and an effective portion. A surface of the wire in the end turn portion has a first area and a second area softer than the first area. Further, in a circumferential direction around an axis of the wire, the second area is formed over a range wider than that of the first area.

For example, the first area is formed on an outer diameter side of the wire, and the second area is formed on an inner diameter side of the wire.

In a section of the wire having the first area and the second area, the surface of the wire includes a first point, which is, of a pair of intersection points of a first center line passing through the axis of the wire and parallel to a coil axis with the surface of the wire, an intersection point located on the effective portion side, a second point, which is, of a pair of intersection points of a second center line passing through the axis of the wire and parallel to a radial direction around the coil axis with the surface of the wire, an intersection point located on a far side from the coil axis, a third point, which is, of the pair of intersection points of the first center line with the surface of the wire, an intersection point located on a side opposite to the first point, and a fourth point, which is, of the pair of intersection points of the second center line with the surface of the wire, an intersection point located on a side opposite to the second point. For example, the first area is formed over a range covering the second point, and the second area is formed over a range covering the first point, the third point, and the fourth point.

The wire includes a first layer having the first area, and a second layer having the second area and softer than the first layer. Suitably, the axis of the wire passes through the first layer in the end turn portion.

For example, the second area is formed at least on part of a range from an edge to 1.2 turns of the wire in the end turn portion. Suitably, the second area has a thickness of 0.6 mm or more.

For example, the surface of the wire in the effective portion includes the first area over a whole circumference.

A suspension device of an embodiment includes a first spring seat, a second spring seat, and the coil spring provided between the first spring seat and the second spring seat.

According to an embodiment, a coil spring manufacturing method comprises: winding a wire in a helical shape to form a coil spring including an end turn portion and an effective portion; connecting a pair of electrodes with the end turn portion; applying an alternating current of 1 kHz or more between the pair of electrodes to heat a portion of the end turn portion and form a first area and a second area softer than the first area on a surface of the wire in the end turn portion.

### Advantageous Effects of Invention

The disclosure can provide a coil spring having excellent settling resistance and corrosion fatigue resistance, a suspension device comprising the coil spring, and a manufacturing method of the coil spring.

### Brief Description of Drawings

FIG. 1 is a schematic cross-sectional view of a suspension device of the first embodiment.
FIG. 2 is a schematic perspective view of a coil spring of the first embodiment.
FIG. 3 is a schematic cross-sectional view of the coil spring along the III-III line of FIG. 2.
FIG. 4 is a schematic cross-sectional view of the coil spring along the IV-IV line of FIG. 2.
FIG. 5 is a graph showing an example of hardness distribution inside the wire of the coil spring.
FIG. 6 is a graph showing an example of the hardness distribution on the surface of the wire.
FIG. 7 is a flowchart showing an example of a coil spring manufacturing method.
FIG. 8 is a diagram showing an example of a local softening process conducted on the wire in manufacturing the coil spring.
FIG. 9 is a schematic perspective view of a coil spring of the second embodiment.

### Mode for Carrying Out the Invention

Some embodiments will be described hereinafter with reference to the accompanying drawings. The embodiments exemplarily show a McPherson strut type suspension device, a coil spring used in the suspension device, and a manufacturing method of the coil spring. The coil spring disclosed in each embodiment may be used for other types of suspension devices and may be used for purposes other than suspension devices.

### [First embodiment]

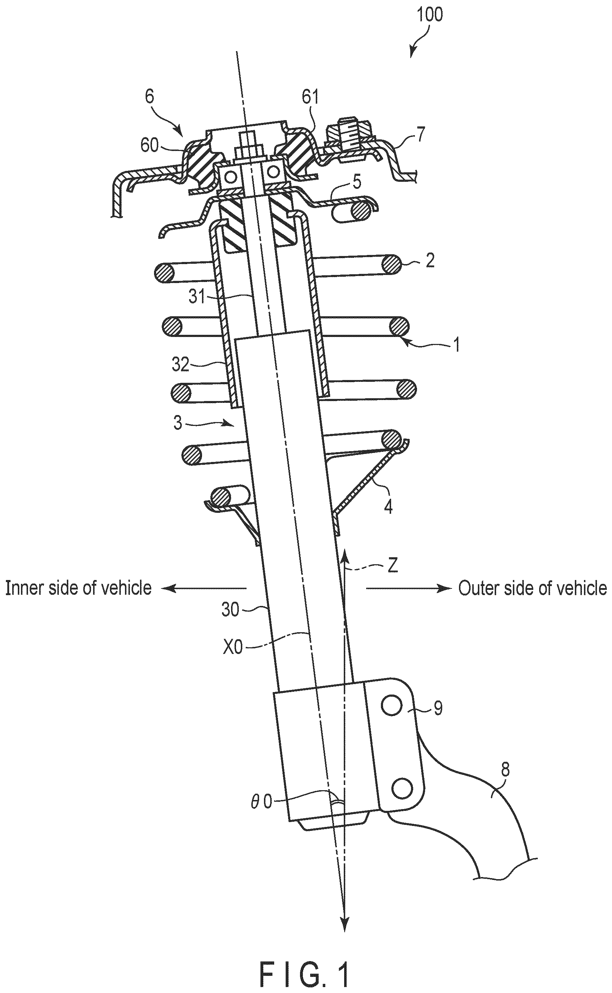

FIG. 1 is a schematic cross-sectional view of a suspension device 100 of the first embodiment. This suspension device 100 comprises a coil spring 1 for vehicle suspension. The coil spring 1 comprises a wire 2 wound in a helical shape. The wire 2 is formed of, for example, spring steel.

The suspension device 100 further comprises a shock absorber 3, a first spring seat 4, and a second spring seat 5. The second spring seat 5 is located above the first spring seat 4 in a perpendicular direction Z. The coil spring 1 is attached to the suspension device 100 with being compressed between the first spring seat 4 and the second spring seat 5.

The shock absorber 3 comprises a cylinder 30 accommodating a fluid such as oil, a rod 31 inserted into the cylinder 30, a damping force generation mechanism provided inside the cylinder 30, and a cover member 32 covering the sliding portion of the rod 31. The rod 31 can extend and contract parallel to an axis X0 of the shock absorber 3 relative to the cylinder 30. The damping force generation mechanism provides resistance against the motion of the rod 31.

The upper end portion of the shock absorber 3 is attached to a vehicle body 7 via a mount insulator 6. The mount insulator 6 comprises an anti-vibration rubber 60 and a support member 61 secured to the vehicle 7. The lower end portion of the shock absorber 3 is attached to a knuckle member 8, which supports an axle, via a bracket 9. In the example of FIG. 1, the axis X0 of the shock absorber 15 inclines relative to the perpendicular direction Z at angle θ0 that is an acute angle.

The coil spring 1 is attached in a state where it is compressed between the first spring seat 4 and the second spring seat 5, elastically supports a load applied from the upper side, and extends and contracts in a range of a predetermined flexure amount (between a full-rebound and a full-bump) depending on the load.

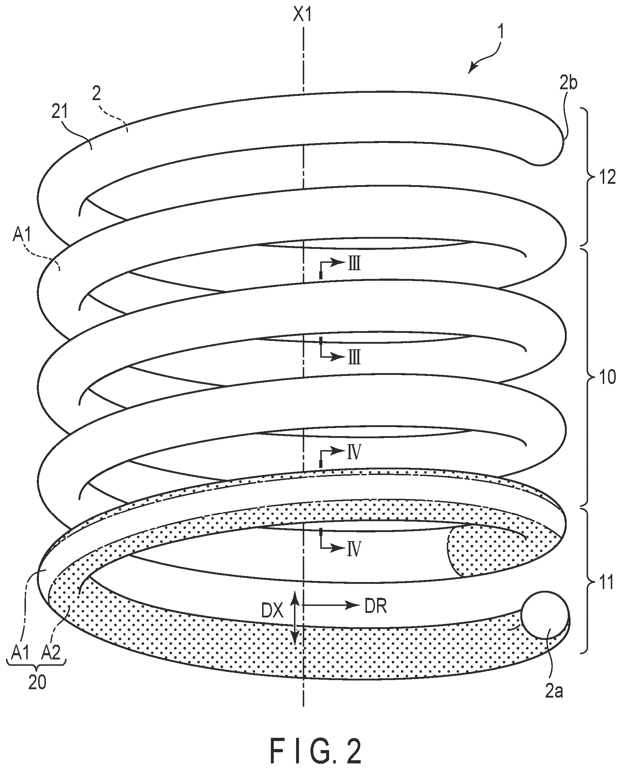

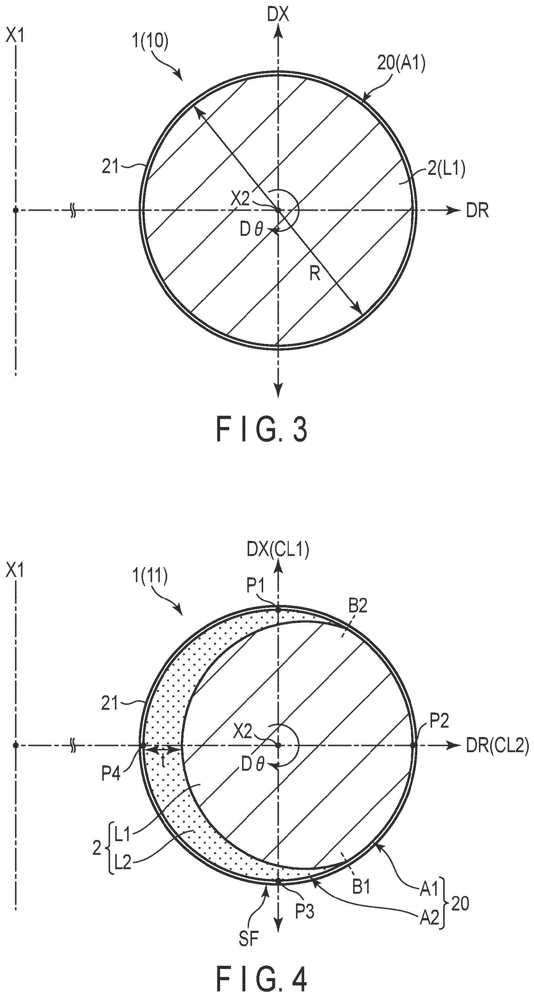

FIG. 2 is a schematic perspective view of the coil spring 1 of the present embodiment. FIG. 3 is a schematic cross-sectional view of the coil spring 1 along the III-III line of FIG. 2. FIG. 4 is a schematic cross-sectional view of the coil spring 1 along the IV-IV line of FIG. 2.

As shown in FIG. 2, the coil spring 1 comprises an effective portion 10, a first end turn portion 11, and a second end turn portion 12. The first end turn portion 11 is a portion that contacts the first spring seat 4. The second end turn portion 12 is a portion that contacts the second spring seat 5. The effective portion 10 is a portion that is located between the first end turn portion 11 and the second end turn portion 12.

In the present embodiment, the first end turn portion 11 includes not only the portion that contacts the first spring seat 4 at all times but also a portion that separates from the first spring seat 4 when the compressive load applied to the coil spring 1 is less than a predetermined value, and that contacts the first spring seat 4 when the compressive load applied to the coil spring 1 exceeds the predetermined value. Similarly, the second end turn portion 12 includes not only the portion that contacts the second spring seat 5 at all times but also a portion that separates from the second spring seat 5 when the compressive load applied to the coil spring 1 is less than a predetermined value, and that contacts the second spring seat 5 when the compressive load applied to the coil spring 1 exceeds the predetermined value. For example, the first end turn portion 11 is a range from an edge 2a on the lower side to 1.2 turns of the wire 2; the second end turn portion 12 is a range from an edge 2b on the upper side to 1.2 turns of the wire 2.

In the effective portion 10, the wire 2 is wound a plurality of times around a coil axis X1. For example, the coil axis X1 inclines to form an acute angle with respect to the perpendicular direction Z and the axis X0 of the shock absorber 3 shown in FIG. 1. Hereinafter, as shown in FIG. 2, an axial direction DX parallel to the coil axis X1 and a radial direction DR around the coil axis X1 are defined.

As shown in FIG. 3, the surface 20 of the wire 2 is covered with a coating film 21 as a whole. For example, a diameter R of the wire 2 is 8 to 18 mm, and the thickness of the coating film 21 is 40 µm or more.

In the present embodiment, the surface 20 of the wire 2 has a first area A1 and a second area A2 softer than the first area A1 (the second area A2 corresponding to the region indicated by dots in FIG. 2). In the example of FIG. 2, the second area A2 is provided in part of the first end turn portion 11. In the surface 20, the portion excluding the second area A2 is the first area A1.

In other words, in the surface 20 of at least part of the first end turn portion 11, the distribution of the hardness in a circumferential direction Dθ around an axis X2 of the wire 2 shown in FIG. 4 is not uniform. To the contrary, in the surface 20 of the second end turn portion 12 and the effective portion 10, the distribution of the hardness is uniform over the whole circumference direction Dθ.

As shown in FIG. 3, the wire 2 in the effective portion 10 is formed of a first layer L1 as a whole. The first area A1 corresponds to the surface of the first layer L1. The second end turn portion 12 is also formed of the first layer L1 as a whole.

As shown in FIG. 4, the first end turn portion 11 has, in addition to the first layer L1, a second layer L2 softer than the first layer L1. The second area A2 corresponds to the surface of the second layer L2. In the example of FIG. 4, the proportion of the first layer L1 in the cross-sectional area of the wire 2 is greater than that of the second layer L2 in the cross-sectional area of the wire 2. The axis X2 of the wire 2 passes through the first layer L1.

As shown in FIG. 4, in the surface 20 of the wire 2, a first point P1, a second point P2, a third point P3, and a fourth point P4 are defined. The first point P1 is the closest position to the effective portion 10 located on the upper side of the axial direction DX in the surface 20. The second point P2 is the farthest position from the coil axis X1 in the radial direction DR in the surface 20. The third point P3 is the farthest position from the effective portion 10 in the axial direction DX (the position on the side opposite to the first point P1 across an axis X2). The fourth point P4 is the closest position to the coil axis X1 in the radial direction DR (the position on the side opposite to the second point P2 across the axis X2). The first point P1, the second point P2, the third point P3, and the fourth point P4 are arranged in order at intervals of 90 degrees in the circumferential direction Dθ.

From another viewpoint, the first point P1 is, of a pair of intersection points of a first center line CL1 passing through the axis X2 and parallel to the coil axis X1 with the surface 20, the intersection point located on the effective portion 10 side. The second point P2 is, of a pair of intersection points of a second center line CL2 passing through the axis X2 and parallel to the radial direction DR with the surface 20, the intersection point located on the far side from the coil axis X1. The third point P3 is, of a pair of intersection points of the first center line CL1 with the surface 20, the intersection point located on the side opposite to the first point P1. The fourth point P4 is, of a pair of intersection points of the second center line CL2 with the surface 20, the intersection point located on the side opposite to the second point P2.

In the first end turn portion 11, the first area A1 and the second area A2 are arranged in the circumferential direction Dθ. For example, the first area A1 is formed in the outer diameter side of the wire 2, and the second area A2 is formed in the inner diameter side of the wire 2. In the present embodiment, a border B1 between the first area A1 and the second area A2 is located between the second point P2 and the third point P3. In the present embodiment, a border B2 between the first area A1 and the second area A2 is located between the first point P1 and the second point P2.

The first area A1 is formed over a range from the border B2 to the border B1 in the circumferential direction Dθ and covers the second point P2. The second area A2 is formed over a range from the border B1 to the border B2 in the circumferential direction Dθ and covers the first point P1, the third point P3, and the fourth point P4.

Thus, on the section of FIG. 4, the length in the circumferential direction Dθ of the second area A2 is longer than that of the first area A1. That is, in the circumference direction Dθ, the second area A2 is formed over a range wider than that of the first area A1.

The third point P3 and its vicinity correspond to a seat surface SF that contacts the first spring seat 4 shown in FIG. 1 at all times or when the coil spring 1 is compressed. That is, the second area A2 may range at least partially into the seat surface SF of the first end turn portion 11.

More specifically, for example, when the first point P1, the second point P2, the third point P3, and the fourth point P4 are respectively regarded as 0 o'clock, 3 o'clock, 6 o'clock, and 9 o'clock, the second area A2 is formed clockwise in a range from 5 o'clock to 1 o'clock, covering a range of 240 degrees. The first area A1 is formed clockwise in a range from 1 o'clock to 5 o'clock, covering a range of 120 degrees.

The formation range of the second area A2 is not limited to the clockwise range from 5 o'clock to 1 o'clock. For example, the second area A2 may be formed such that its center is located in a range from the third point P3 to the first point P1 in the circumferential direction Dθ. In the example of FIG. 4, this center coincides with the fourth point P4. For example, the second area A2 may be formed such that the border B1 clockwise ranges from 5 o'clock to 6 o'clock, and the border B2 clockwise ranges from 0 o'clock to 1 o'clock.

The second area A2 should be formed at least on part of a range from the edge 2a to 1.2 turns in the direction along which the wire 2 extends in a helical shape (the direction along the axis X2). In the example of FIG. 2, the second area A2 is successively formed from the edge 2a and covers the whole range. As another example, the second area A2 may not be formed in a portion having a certain distance from the edge 2a. Examples of this portion include a portion that always contacts the first spring seat 4 regardless of the compression status of the coil spring 1.

In the example of FIG. 4, a thickness t of the second layer L2 is the greatest at the center in the circumference direction Dθ (the second center line CL2). The thickness t gradually decreases from the center toward the borders B1 and B2. The maximum value of the thickness t is, for example, 0.6 mm or more and is preferably 1.0 mm or more. In terms of the relationship with the diameter R of the wire 2, the maximum value of the thickness t is 2% or more and also 8% or less of the diameter R.

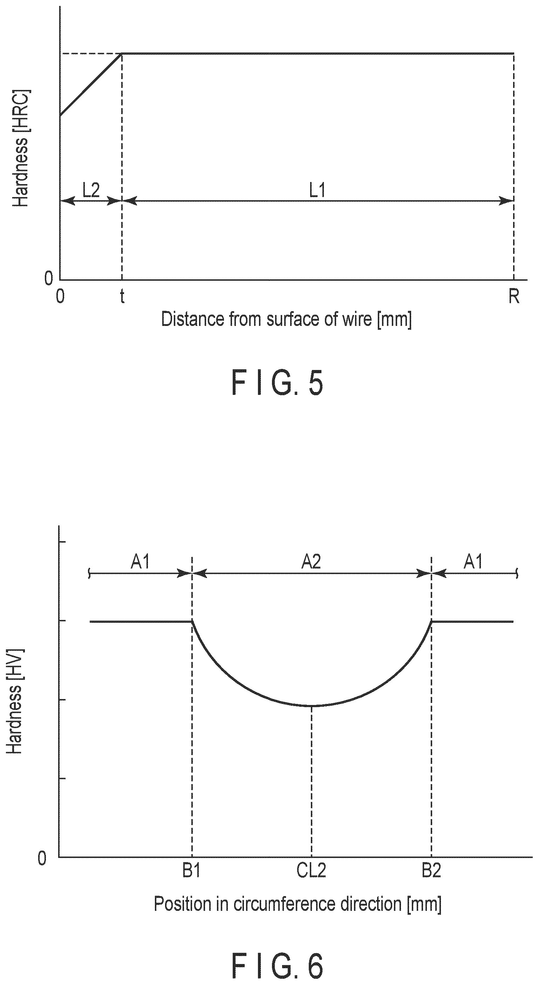

FIG. 5 is a graph showing an example of the hardness distribution of the wire 2 along the second center line CL2 of FIG. 4. In this graph, the horizontal axis represents the distance [mm] from the surface 20 of the wire 2, and the vertical axis represents Rockwell hardness [HRC].

In the example of FIG. 5, the hardness of the first layer L1 is substantially constant. In the second layer L2, the hardness in the surface 20 (the second area A2) is the least, and the hardness gradually increases with increasing distance from the surface 20 and reaches the hardness of the first layer L1 at the position of the thickness t. The second layer L2 is softer than the first layer L1 as a whole. The hardness of the second layer L2 has a gradient depending on the distance from the surface 20.

FIG. 6 is a graph showing an example of the hardness distribution of the surface 20 in the circumferential direction Dθ. In this graph, the horizontal axis represents the position [mm] in the circumferential direction Dθ on the surface 20, and the vertical axis represents Vickers hardness [HV].

In the example of FIG. 6, the hardness of the first area A1 is substantially constant. In the second area A2, the hardness is the least in the vicinity of the second center line CL2 in the circumference direction Dθ. Between the second center line CL2 and the border B1 and between the second center line CL2 and the border B2, the hardness gradually increases with becoming farther from the second center line CL2 and reaches the hardness of the first area A1 at the borders B1 and B2. The second area A2 is softer than the first area A1 as a whole. The hardness of the second area A2 has a gradient in which the second center line CL2 has the least value.

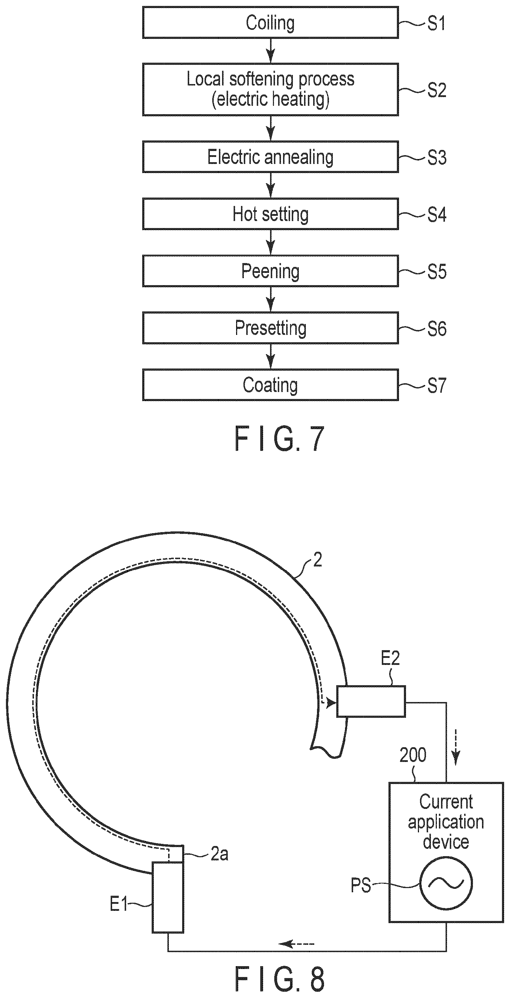

FIG. 7 is a flowchart showing an example of a manufacturing method of a coil spring 1. First, the wire 2 is helically wound by a coiling machine, and this wound portion is cut by a cutter (step S1). At this point, the surface 20 of the wire 2 has the same hardness as a whole. Subsequently, a local softening process for forming the second area A2 on the surface 20 is conducted (step S2). The details of the local softening process are explained later with reference to FIG. 8.

After the local softening process, electric annealing is conducted on the wire 2 (step S3). In this electric annealing, for example, the wire 2 is heated for one minute or less in a temperature range of 400 to 500°C. After the electric annealing, hot setting which applies an excessive load to the wire 2 is conducted with the wire 2 being heated (step S4).

Subsequently, shot peening is conducted on the wire 2 (step S5), and further, presetting is conducted on the wire 2 (step S6). Subsequently, the coating film 21 is formed as a whole on the surface 20 of the wire 2 (step S7). The local softening process should be conducted before the shot peening. The local softening process may be conducted after the electric annealing or after the hot setting.

FIG. 8 is a diagram showing an example of the local softening process. In the present embodiment, the local softening process uses a current application device 200 for conducting electric heating with high frequencies.

The current application device 200 comprises a power source PS, a first electrode E1, and a second electrode E2. The power source PS generates high-frequency alternating currents. The first electrode E1 and the second electrode E2 are connected to the power source PS via wiring.

For performing electric heating, the first electrode E1 and the second electrode E2 are connected to the wire 2 that has been coiled. In the example of FIG. 8, the first electrode E1 is connected to the vicinity of the edge 2a. For example, the second electrode E2 is connected to any positions from the edge 2a to 1.2 turns.

Thereafter, the current application device 200 starts applying currents. At this time, alternating currents flow from the power source PS through the circuit including the first electrode E1, the wire 2, and the second electrode E2.

When alternating currents flow through the wire 2, the skin effect occurs on the surface 20 of the wire 2. This increases the current density of the surface 20 of the wire 2. Further, in the wire 2 that has been coiled, currents mainly flow through its inner diameter side. Thus, of the surface 20 of the wire 2, mainly, portions in the inner diameter side are preferentially heated.

For example, when alternating currents flow, the portions in the inner diameter side of the wire 2 are heated to be in a temperature range less than the austenitizing starting temperature. In the vicinity of the point P4 in FIG. 4, the portion from the surface 20 to at least depth of 0.6 mm (or the portion from the surface 20 to the depth that is 2% or more and also 8% or less of the diameter R) should be preferably heated to be in the above temperature range.

This heating forms a heat affected zone (HAZ) in the wire 2. For example, the heat affected zone is formed over a range covering the first point P1, the third point P3, and the fourth point P4 shown in FIG. 4 and has the greatest thickness in the vicinity of the fourth point P4, similarly to the second layer L2. When the heat affected zone is air-cooled, the second layer L2 whose hardness is reduced to be lower than the original wire 2 is generated.

When the temperature of the wire 2 at the time of heating is too high, quench hardening may occur in part of the wire 2. This could increase the hardness to be higher than that before the electric heating. When the frequency of the alternating currents is too low or electric application is conducted for too long time, the whole surface 20 may be softened or the second layer L2 may range into the vicinity of the wire 2.

Considering these items, the frequency of alternating currents is preferably high-frequency of 1 kHz or more and more preferably high-frequency of 100 kHz or more. The frequency of alternating current may be 200 kHz or more. Time for conducting electric application of alternating currents should be 5 seconds or less and is, for example, 0.5 seconds.

The manufacturing method explained with reference to FIG. 7 and FIG. 8 is merely an example. The coil spring 1 can be produced by various other types of methods.

In the above embodiment, in the first end turn portion 11 of the coil spring 1, the surface 20 of the wire 2 has the first area A1 and the second area A2. The second area A2 is softer than the first area A1. Thus, even if a corrosion pit is generated in the second area A2, it does not easily develop to a crack of the wire 2. Even if a crack is generated, its development can be delayed. Thus, providing the second area A2 in the first end turn portion 11 improves the corrosion fatigue resistance of the first end turn portion 11.

If the second area A2 (the second layer L2) is formed over the entire wire 2, the settling resistance of the coil spring 1 could be decreased. To the contrary, in the present embodiment, the second area A2 is not formed in the effective portion 10. Therefore, the settling resistance can be satisfactorily maintained in the effective portion 10. The first end turn portion 11 is a portion whose action stress is less than that of the effective portion 10. Thus, even if the second area A2 is provided in the first end turn portion 11, the settling resistance of the whole coil spring 1 is not easily affected.

The first end turn portion 11 is a portion that contacts the first spring seat 4 provided on the lower side. Thus, if a foreign object such as sand gets into the portion between the first end turn portion 11 and the first spring seat 4, the coating film 21 is damaged as the suspension device 100 is used, and a corrosion pit is easily generated in the first end turn portion 11. To the contrary, in the present embodiment, the second area A2 is provided in a range including the seat surface SF of the first end turn portion 11. For this reason, even if a corrosion pit is generated as a foreign object gets into the portion between the first end turn portion 11 and the first spring seat 4, a crack to be caused by this corrosion pit can be suppressed.

Moreover, the above foreign object easily gets into the lower side of the portion that contacts and separates from the first spring seat 4 in the first end turn portion 11. Thus, forming the second area A2 to cover such a portion can effectively increase the corrosion fatigue resistance. As described with reference to FIG. 2, forming the second area A2 at least on part of a range from the edge 2a to 1.2 turns can achieve the sufficient corrosion fatigue resistance with maintaining the settling resistance.

Of the surface 20 of the wire 2, the portion on the coil axis X1 side (the internal side of the coil spring 1) easily receives stress and thus is susceptible to the corrosion fatigue. Thus, as described with reference to FIG. 4, the second area A2 should be preferably formed in the inner diameter side of the coil spring 1.

The corrosion pit may occur not only in the seat surface SF (the vicinity of the third point P3) but also in the vicinity of the first point P1. In a configuration in which the second area A2 is formed in a region narrower than that of the first area A1 in the circumference direction Dθ, the second area A2 cannot cover both of the first point P1 and the third point P3. In contrast, as shown in FIG. 4, the second area A2 in the present embodiment is formed over a range wider than that of the first area A1 in the circumference direction Dθ. Thus, for example, by forming the second area A2 to cover both of the first point P1 and the third point P3, the corrosion fatigue resistance of the first end turn portion 11 can be increased further.

In the manufacturing method of the present embodiment, electric heating using high-frequency alternating currents forms the second area A2 (the second area L2). Electric heating that uses direct currents and low-frequency alternating currents around 50Hz or 60Hz may generate heat-affected zone ranging into the vicinity of the axis X2 of the wire 2. This forms the second layer L2 in a broader range inside the wire 2 and may decrease the settling resistance of the first end turn portion 11. In contrast, in the electric heating using high-frequency alternating currents, the above surface skin effect limits the range, in which the heat-affected zone is formed, to the vicinity of the surface 20. As a result, as shown in FIG. 4, the vicinity of the axis X2 remains the first layer L1, which is hard, increasing the settling resistance of the first end turn portion 11.

Further, in the present embodiment, as shown in FIG. 8, electric heating is conducted on the wire 2 that has been coiled. If heat control is conducted on the wire 2 that has not been coiled, it is significantly difficult to control the formation range of the second area A2 in the circumference direction Dθ. In contrast, when electric heating is conducted on the wire 2 that has been coiled, the inner diameter side of the wire 2 is mainly heated. Therefore, the second layer L2 and the second area A2 can be accurately formed in the inner diameter side. The formation range of the second area A2 in the direction in which the wire 2 extends in a helical shape can also be easily controlled by the position of the first electrode E1 and the second electrode E2.

As described above, using electric heating as a method for forming the second area A2 (the second layer L2) on the wire 2 can provide various favorable effects. However, this does not necessarily exclude applying other methods, such as laser beam heating and induction heating, to the manufacture of the coil spring 1 with the configurations described with reference to FIG. 2 to FIG. 6.

### [Second embodiment]

The second embodiment describes examples of other configurations that can be applied to a coil spring 1. Configurations of the coil spring 1 and a suspension device 100 that are not particularly referred to are similar to those of the first embodiment.

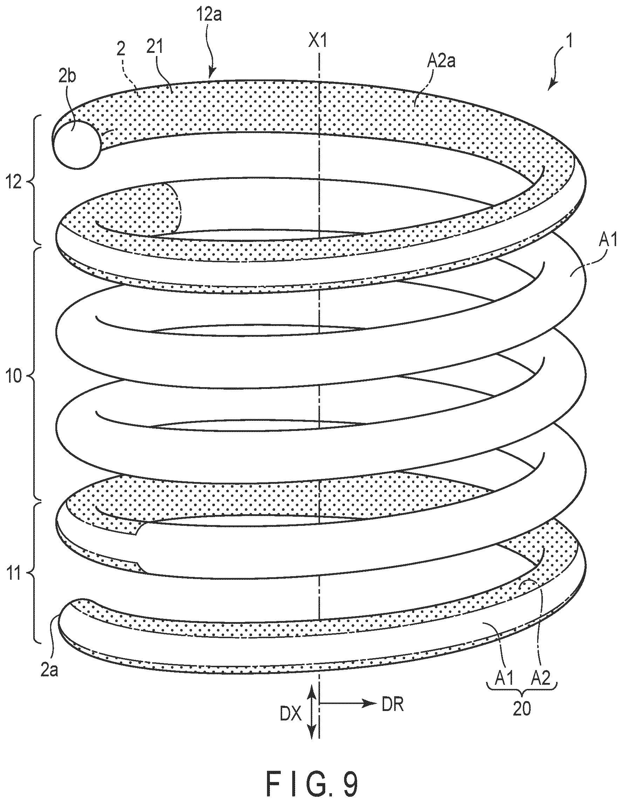

FIG. 9 is a schematic perspective view of the coil spring 1 of the second embodiment. As shown in FIG. 9, in the present embodiment, a second area A2 (hereinafter referred to as "a second area A2a") is formed also in a second end turn portion 12.

The second area A2a should be formed at least on part of a range from an edge 2b to 1.2 turns in the direction along which the wire 2 extends in a helical shape. In the example of FIG. 9, the second area A2a is formed successively from the edge 2b over this range entirely. As another example, the second area A2a may not be formed in a portion having a certain distance from the edge 2b. Examples of this portion include a portion that always contacts the second spring seat 5 regardless of the compression status of the coil spring 1.

The cross-sectional structure of the wire 2 including the second area A2a is the same as the cross-sectional structure shown in FIG. 4. That is, the second area A2a is formed on the inner diameter side of the wire 2. In the second end turn portion 12, the second area A2a is formed over a range wider than that of the first area A1 in the circumference direction Dθ.

The second area A2a can be formed by electric heating in the local softening process (step S2) shown in FIG. 7. The procedure for this electric heating is the same as the procedure described with reference to FIG. 8.

Forming the second area A2a in the same manner in the present embodiment can increase the corrosion fatigue resistance in the second end turn portion 12 as well. The present embodiment can achieve other advantageous effects similar to that of the first embodiment as well.

The first to second embodiments described above do not limit the scope of the present invention to the configuration disclosed in these embodiments. The present invention can be carried out by modifying the configurations disclosed in each of the embodiments into various aspects.

For example, the second area A2 may be formed over the whole circumference direction Dθ on at least part of the first end turn portion 11 and the second end turn portion 12. The second area A2 may range into part of the effective portion 10.

The wire 2 may comprise a multilayer structure which further includes another layer whose hardness is different from those of the first layer L1 and the second layer L2. For example, when this another layer ranges into the surface 20 of the wire 2, an area whose hardness is different from those of the first area A1 and the second area A2 could be additionally formed on the surface 20.

Each embodiment discloses the coil spring 1 having the wire 2 cylindrically wound. However, the coil spring 1 may have another shape such as a barrel shape whose diameter decreases toward the first end turn portion 11 and the second end turn portion 12.

### Reference Signs List

1 ... Coil spring, 2 ... Wire, 3 ... Shock absorber, 4 ... First spring seat, 5 ... Second spring seat, 10 ... Effective portion, 11 ... First end turn portion, 12 ... Second end turn portion, 20 ... Surface, 100 ... Suspension device, A1 ... First area, A2 ... Second area, L1 ... First layer, L2 ... Second layer, 200 ... Current application device

## Claims

1. A coil spring formed of a wire that is helically wound and comprising an end turn portion and an effective portion, wherein
a surface of the wire in the end turn portion has a first area and a second area softer than the first area, and
the second area is formed over a range wider than that of the first area in a circumferential direction around an axis of the wire.

2. The coil spring of claim 1, wherein
the first area is formed on an outer diameter side of the wire, and
the second area is formed on an inner diameter side of the wire.

3. The coil spring of claim 1, wherein
in a section of the wire including the first area and the second area, the surface of the wire includes:
a first point, which is, of a pair of intersection points of a first center line passing through the axis of the wire and parallel to a coil axis with the surface of the wire, an intersection point located on the effective portion side;
a second point, which is, of a pair of intersection points of a second center line passing through the axis of the wire and parallel to a radial direction around the coil axis with the surface of the wire, an intersection point located on a far side from the coil axis;
a third point, which is, of the pair of intersection points of the first center line with the surface of the wire, an intersection point located on a side opposite to the first point; and
a fourth point, which is, of the pair of intersection points of the second center line with the surface of the wire, an intersection point located on a side opposite to the second point,
the first area is formed over a range covering the second point, and
the second area is formed over a range covering the first point, the third point, and the fourth point.

4. The coil spring of claim 1, wherein
the wire comprises:
a first layer including the first area; and
a second layer including the second area and softer than the first layer, and
the axis of the wire passes through the first layer in the end turn portion.

5. The coil spring of claim 1, wherein
the second area is formed at least on part of a range from an edge to 1.2 turns of the wire in the end turn portion.

6. The coil spring of claim 1, wherein
the second area has a thickness of 0.6 mm or more.

7. The coil spring of claim 1, wherein
a surface of the wire in the effective portion has the first area over a whole circumference.

8. A suspension device, comprising:
a first spring seat;
a second spring seat; and
the coil spring of any one of claims 1 to 7, which is provided between the first spring seat and the second spring seat.

9. A coil spring manufacturing method, comprising:
winding a wire in a helical shape to form a coil spring including an end turn portion and an effective portion;
connecting a pair of electrodes with the end turn portion;
applying an alternating current of 1 kHz or more between the pair of electrodes to heat a portion of the end turn portion and form a first area and a second area softer than the first area on a surface of the wire in the end turn portion.

10. The coil spring manufacturing method of claim 9, wherein
the second area is formed over a range wider than that of the first area in a circumferential direction around an axis of the wire.
